(19) Europäisches Patentamt
European Patent Office
Office européen des brevets

(11) Veröffentlichungsnummer: **0 377 902 B1**

# (12) EUROPÄISCHE PATENTSCHRIFT

(45) Veröffentlichungstag der Patentschrift: **01.12.93**

(51) Int. Cl.[5]: **C09B 62/24**

(21) Anmeldenummer: **89124121.8**

(22) Anmeldetag: **28.12.89**

Die Akte enthält technische Angaben, die nach dem Eingang der Anmeldung eingereicht wurden und die nicht in dieser Patentschrift enthalten sind.

## (54) Reaktivfarbstoffe.

(30) Priorität: **10.01.89 DE 3900535**

(43) Veröffentlichungstag der Anmeldung:
**18.07.90 Patentblatt 90/29**

(45) Bekanntmachung des Hinweises auf die Patenterteilung:
**01.12.93 Patentblatt 93/48**

(84) Benannte Vertragsstaaten:
**CH DE FR GB LI**

(56) Entgegenhaltungen:
**FR-A- 2 091 415**
**FR-A- 2 148 445**
**GB-A- 2 014 177**

(73) Patentinhaber: **BAYER AG**

**D-51368 Leverkusen(DE)**

(72) Erfinder: **Schündehütte, Karl-Heinz, Prof.-Dr.**
**Klief 75**
**D-5090 Leverkusen 3(DE)**
Erfinder: **Herd, Karl Josef, Dr.**
**Am Gartenfeld 66**
**D-5068 Odenthal(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

## Beschreibung

Gegenstand der vorliegenden Erfindung sind mono-reaktive Mono- und Disazoreaktivfarbstoffe der Formel

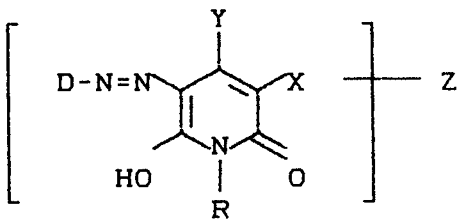

(1)

worin

D = Rest einer Diazokomponente,

R = H, ein gegebenenfalls durch OH, $SO_3H$, $OSO_3H$, $NH_2$, $CO_2H$, NH($C_1$-$C_4$-Alkyl), $C_1$-$C_4$-Alkoxy substituierter $C_1$-$C_6$-Alkylrest, ein cycloaliphatischer $C_3$-$C_6$-Kohlenwasserstoffrest, ein gegebenenfalls durch $SO_3H$, $CO_2H$, $CH_3$, Cl, Br, $OCH_3$, $OC_2H_5$, $NH_2$, NH($C_1$-$C_4$-Alkyl) substituierter Phenyl- oder Hetarylrest,

X = H, Cl, Br, $CH_3$, $CH_2SO_3H$, $CH(CH_3)$-$SO_3H$, $CONH_2$, CN,

$COCH_3$, $SO_3H$, 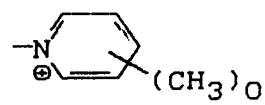 oder 1

oder

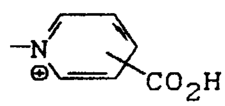

Y = H, OH, ein gegebenenfalls durch Cl, OH, $SO_3H$, $OSO_3H$, $CO_2H$ substituierter $C_1$-$C_4$-Alkylrest; ein gegebenenfalls durch $SO_3H$, $CO_2H$, $CH_3$, Cl, Br, $OCH_3$, $OC_2H_5$, $NH_2$, NH($C_1$-$C_4$-Alkyl) substituierter Phenyl- bzw. Benzylrest oder $CO_2H$ und

Z für den faserreaktiven Rest der Formel (2)

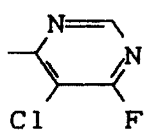

(2)

steht, der über eine Iminobrücke an den Chromophor gebunden ist.

Aus GB-A-2014 177, FR-A-2148 445 und FR-A-2091 415 sind zwar bereits faserreaktive Pyridonazofarbstoffe bekannt, deren anwendungstechnische Eigenschaften aber zu verbessern waren.

D steht bevorzugt für einen sulfogruppenhaltigen Rest der Benzol-, Naphthalin- oder Azobenzolreihe und kann zusätzlich durch weitere Substituenten, beispielsweise $SO_3H$, $CO_2H$, $C_1$-$C_4$-Alkyl, Halogen, $C_1$-$C_4$-Alkoxy, Acylamino, Ureido, Mesylamino, Amino, $C_1$-$C_4$-Alkylamino, Amino-$C_1$-$C_4$-alkyl, $C_1$-$C_4$-Alkylamino-$C_1$-$C_4$-alkyl, speziell Aminomethyl bzw. (Methylamino)methyl, oder 2-Aminoethylsulfonyl bzw. 2-(N-Alkylamino)ethylsulfonyl substituiert sein.

Z kann sowohl an D als auch an Y oder R gebunden sein.

Hervorzuheben sind monoreaktive Azoreaktivfarbstoffe der Formeln

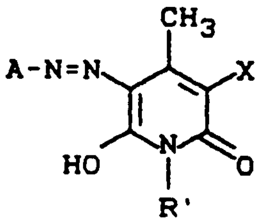

(3)

und

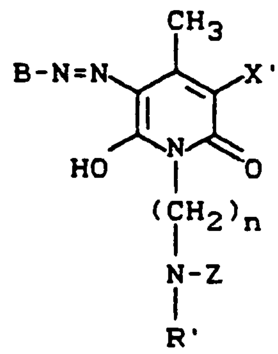

(4)

worin A =

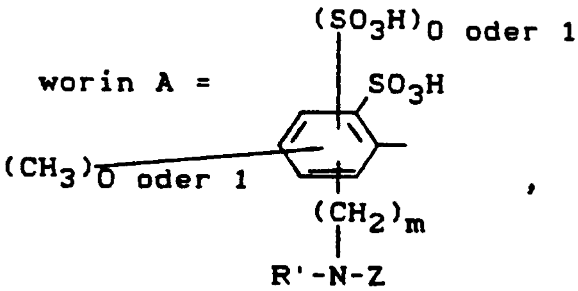

,

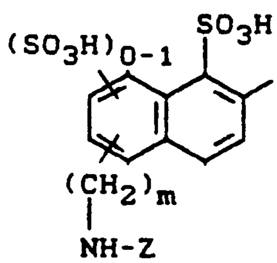

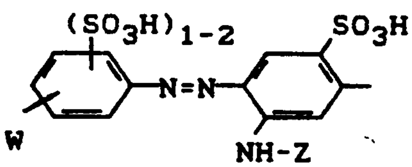

B =

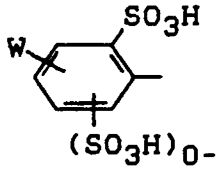

,

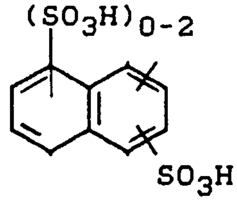

,

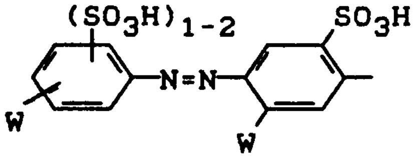

worin

n = 2, 3 oder 4,

m = 0 oder 1

R' = H, $CH_3$, $C_2H_5$, $C_3H_7$, $C_4H_9$, $CH_2CH_2OH$, $CH_2CH_2SO_3H$, $CH_2CH_2OSO_3H$ oder $CH_2CH_2CH_2$-$OCH_3$

X' = H, $SO_3H$, $CONH_2$ oder $CH_2SO_3H$,

W = H, $CH_3$, $OCH_3$, $OC_2H_5$, Cl, Br, $NHCOCH_3$ oder $NHCONH_2$.

Besonders bevorzugt sind Monoazoreaktivfarbstoffe der Formel

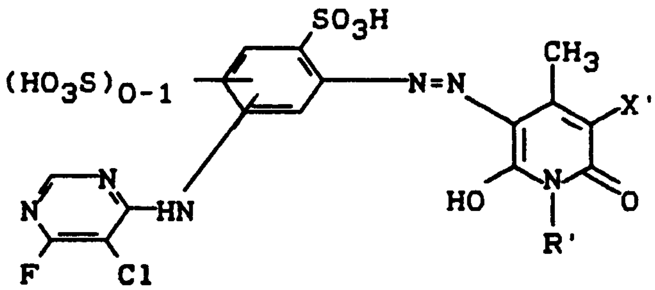

(5)

worin X' und R' die oben genannte Bedeutung haben.

Die erfindungsgemäßen Azofarbstoffe können in mehreren tautomeren Formen existieren. Der Einfachheit halber werden die Farbstoffe nur in einer dieser tautomeren Formen angegeben.

Die Herstellung der Farbstoffe (2) erfolgt, indem man aminogruppenhaltige Pyridonfarbstoffe der Formel

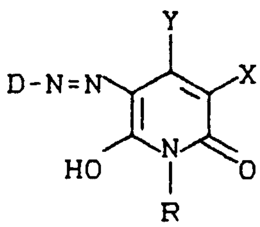

(6)

worin D, Y, X und R obengenannte Bedeutung haben und eine acylierbare Aminogrupppe aufweisen, mit 4,6-Difluor-5-chlorpyrimidin in Gegenwart von säurebindenden Mitteln im pH-Bereich von 3,5-9,5 kondensiert oder aber eine mit Z ( = 5-chlor-6-fluor-4-pyrimidinyl-Rest) substituierte Aminoverbindung D-$NH_2$, z.B. A-$NH_2$, diazotiert und in bekannter Weise auf ein Pyridonderivat kuppelt, das keinen Rest Z enthält, bzw. eine Aminoverbindung D-$NH_2$, die keinen Rest Z enhält, wie z.B. B-$NH_2$, diazotiert und in bekannter Weise auf ein mit Z substituiertes Pyridonderivat kuppelt.

Aminoverbindungen A-$NH_2$, z.B. solche der Formel (7, Q = Z) bzw. (8, Q = Z) erhält man, indem Diaminoverbindungen der Formel (7, Q = H) bzw. (8, Q = H) mit 4,6-Difluor-5-chlorpyrimidin in Gegenwart säurebindender Mittel kondensiert:

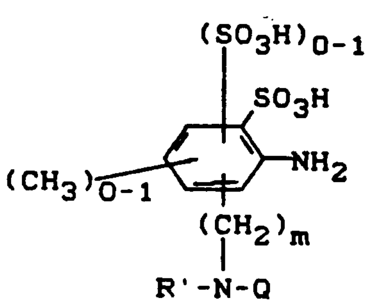

,

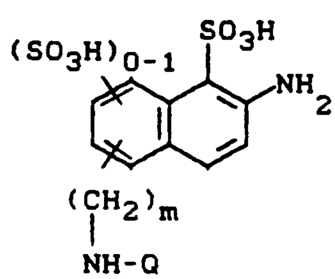

(7) (8)

Azogruppenhaltige Aminoverbindungen A-$NH_2$, wie

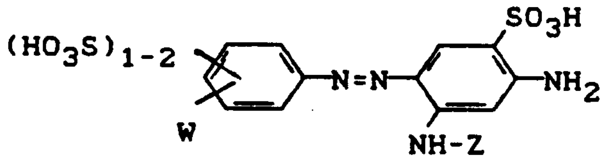 (9)

erhält man durch Diazotieren von Anilinderivaten der Formel (10) und Kuppeln der Diazonium-

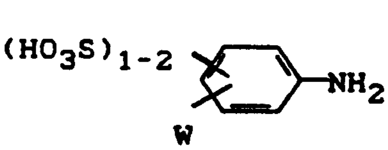 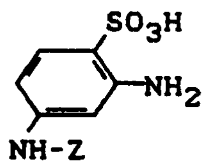

(10) (11)

verbindungen auf eine Verbindung der Formel (11).

Aminoverbindungen der Formel B-$NH_2$ sind ebenso wie von Resten Z freie Pyridonderivate literaturbekannt. Die Herstellung von Z-substituierten Pyridonderivaten erfolgt durch Kondensation von 4,6-Difluor-5-chlorpyrimidin mit Pyridonen, die eine primäre oder sekundäre Aminfunktion an einem der Substituenten aufweisen.

Die Herstellung von Monoazoreaktivfarbstoffen der Formel (5) erfolgt entweder durch Kondensation von Aminoazo-Farbstoffen der Formel

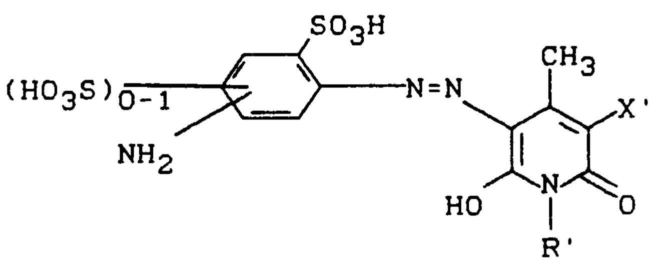 (12)

mit 4,6-Difluor-5-chlorpyrimidin in Gegenwart von säurebindenden Mitteln, wie Soda oder Bicarbonat, oder aber durch Diazotieren von Aminoverbindungen der Formel (13)

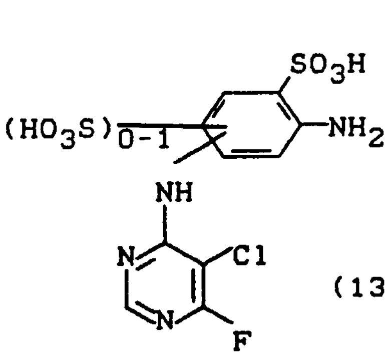 (13) 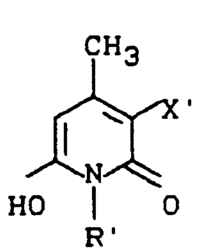 (14) 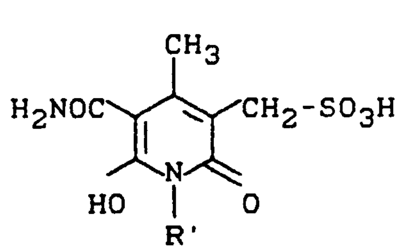 (15)

und Kuppeln der Diazoniumverbindungen auf Pyridone der Formel (14) bzw (15), wie es z.B. in der DE-A 2 162 612 beschrieben ist.

Verbindungen (13) sind z.B. durch Kondensation von 2,4-Diaminobenzolsulfonsäure bzw. 2,4-Diamino-1,5-benzoldisulfonsäure mit 4,6-Difluor-5-chlorpyrimidin bei Temperaturen von 20° bis 50°C und pH-Werten van 4,5 bis 10,0 zugänglich.

Die neuen monofunkionellen Azopyridonfarbstoffe mit dem faserreaktiven 5-Chlor-6-fluor-4-pyrimidinyl-Rest eignen sich zum Färben und Bedrucken von Hydroxyl- oder Amidgruppen enthaltenden Materialien, wie Textilfasern, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßig in Gegenwart säurebindender Mittel und gegebenenfalls durch Hitzeeinwirkung nach den für Reaktivfarbstoffe üblichen Verfahren erfolgt.

Die angegebenen Formeln der Farbstoffe sind die der entsprechenden freien Säuren. Die Farbstoffe werden im allgemeinen in Form der Alkalisalze, z.B. der Lithium-, Natrium- oder Kaliumsalze, isoliert und als solche zum Färben und Bedrucken eingesetzt.

Die Farbstoffe lassen sich sowohl als Pulver wie auch als konzentrierte wässrige Farbstofflösung in der Färberei einsetzen.

Beispiel 1

27,3 g 2,4-Diaminobenzolsulfonsäure werden in 150 ml Wasser suspendiert und mit verdünnter Natronlauge bei pH 6,5 gelöst. Man fügt 1 g Natriumdihydrogenphosphat und 1 g Dinatriumhydrogenphosphat als Puffersubstanzen zu und erwärmt auf 35°C. Innerhalb einer Stunde dosiert man 23,2 g 5-Chlor-4,6-difluorpyrimidin zu und hält dabei sowie in der Nachreaktionsphase den pH-Wert mit Sodalösung konstant zwischen 6,2 und 6,5. Die Temperatur steigt während der Acylierung auf 40°C an und fällt nach einer einstündigen Nachrührzeit wieder auf 35°C ab.

Zur Acylierungsmischung gibt man 200 g Eis und 40 ml 25%ige Salzsäure und tropft dann innerhalb van 15 Minuten 35 ml einer Natriumnitritlösung (300 g/l) zu. Durch gelegentliche Eiszugabe hält man die Reaktionstemperatur unterhalb von 5°C. Die Diazotierung ist nach ca. 30 Minuten beendet. Die Diazoverbindung ist in hellgelber kristalliner Form ausgefallen. Der Überschuß an Nitrit wird mit Amidosulfonsäurelösung entfernt.

41,2 g 1,4-Dimethyl-3-aminocarbonyl-5-sulfomethyl-6-hydroxy-2-pyridon-Natriumsalz werden in 250 ml Wasser bei pH 7 gelöst und diese Lösung zur obigen Diazoniumsalzsuspension zudosiert. Durch Zutropfen von Sodalösung hält man den pH-Wert bei 6,5. Nach 30 Minuten ist die Kupplung beendet. Es resultiert eine klare gelbe Lösung. Der Farbstoff wird durch Zugabe von 90 g Kochsalz ausgesalzen und bei 40°C durch Abnutschen isoliert. Trocknen bei 50°C im Vakuum liefert 135 g salzhaltiges gelbes Farbstoffpulver, das Baumwolle nach dem für Reaktivfarbstoffe praktizierten Färbeverfahren in brillanten grünstichig gelbem Farbton färbt ($\lambda_{max}$ = 420 nm in $H_2O$).

Der Farbstoff besitzt die Struktur

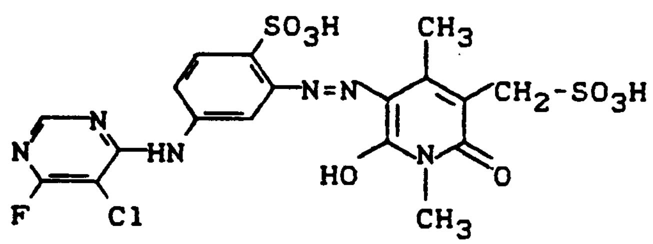

Beispiel 2 bis 7

Ähnlich wertvolle Reaktivfarbstoffe mit vergleichbarer Nuance erhält man, wenn man anstelle van 1,1-Dimethyl-3-aminocarbonyl-5-sulfomethyl-6-hydroxy-2-pyridon in Beispiel 1 nun als Kupplungskomponente 1-Ethyl-4-methyl-3-aminocarbonyl-5-sulfomethyl-6-hydroxy-2-pyridon (Beispiel 2, $\lambda_{max}$ = 420 nm), 1-n-Butyl-4-methyl-3-aminocarbonyl-5-sulfomethyl-6-hydroxy-2-pyridon (Beispiel 3, $\lambda_{max}$ = 422 nm), 1,4-Dimethyl-3-sulfo-6-hydroxy-2-pyridon (Beispiel 4, $\lambda_{max}$ = 421 nm), 1-(2-Sulfoethyl)-4-methyl-3-aminocarbonyl-6-hydroxy-2-pyridon (Beispiel 5), 1-(2′-Sulfatoethyl)-4-methyl-6-hydroxy-2-pyridon (Beispiel 6) oder 4-Carboxy-6-hydroxy-2-pyridon (= Citrazinsäure) (Beispiel 7) einsetzt.

Beispiel 8

38,9 g 2,5-Diamino-1,4-benzoldisulfonsäure werden ganz analog zur 2,4-Diaminobenzolsulfonsäure in Beispiel 1 mit 23,2 g 5-Chlor-4,6-difluorpyrimidin bei 40 °C kondensiert, das Kondensationsprodukt diazotiert und analog Beispiel 1 auf 18,1 g 1,4-Dimethyl-6-hydroxy-2-pyridon gekuppelt. Es wird ein Farbstoff der Struktur

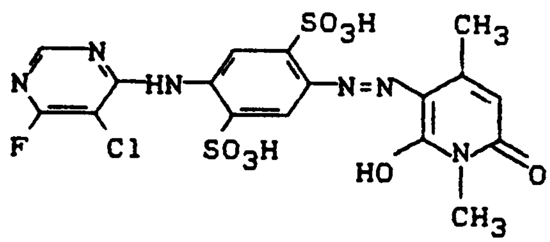

isoliert, der Baumwolle mit gelbem Farbton färbt.

Beispiel 9

Beim Einsatz von 2,4-Diamino-1,5-benzoldisulfonsäure, 5-Chlor-4,6-difluorpyrimidin und 1,4-Dimethyl-3-aminocarbonyl-6-hydroxy-2-pyridon in entsprechenden Mengenverhältnissen und Durchführung der drei Reaktionsschritte analog Beispiel 1 bzw. 8 erhält man einen Farbstoff der Struktur

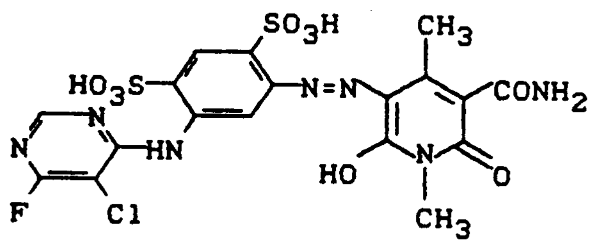

Beispiel 10

36,5 g 5-Aminomethyl-2-amino-1-naphthalinsulfonsäure werden in 300 ml Wasser, 100 g Eis und 80 ml 25%iger Salzsäure angerührt und mit 35 ml einer 30%igen Natriumnitritlösung diazotiert. Die resultierende Lösung des Diazoniumsalzes wird nach Entfernen des Nitritüberschusses zu einer Lösung von 41,2 g 1,4-Dimethyl-3-aminocarbonyl-5-sulfomethyl-6-hydroxy-2-pyridon (Na-Salz) in 250 ml Wasser zudosiert. Dabei hält man den pH-Wert durch Zutropfen von Sodalösung konstant zwischen 6,5 bis 7,5. Die Kupplungsreaktion ist nach 30 Minuten beendet.

Anschließend erwärmt man auf 35 °C und fügt portionsweise 23,2 g 5-Chlor-4,6-difluorpyrimidin zu. Gleichzeitig dosiert man Sodalösung so zu, daß der pH-Wert sich im Bereich von 7,5 bis 8,5 befindet. Der Farbstoff kristallisiert langsam aus. Es werden nach einstündiger Nachrührzeit 40 g Natriumchlorid zugefügt, 30 Minuten gerührt und der Farbstoff isoliert. Das trockene Farbstoffpulver, dem die Struktur

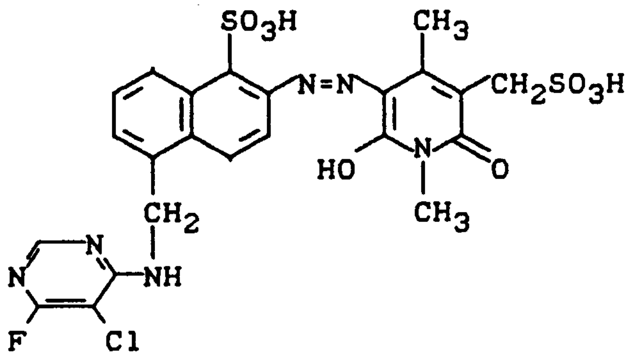

zukommt, liefert auf Baumwolle eine klare, grünstichig gelbe Färbung ($\lambda_{max}$ = 432 nm).

Beispiel 11

Verwendet man in Beispiel 10 anstelle von 5-Aminomethyl-2-amino-1-naphthalinsulfonsäure als Diazokomponente nun äquimolare Mengen an 2-Amino-4-(N-methylaminomethyl)benzolsulfonsäure und setzt analog zu Beispiel 10 um, so erhält man einen Farbstoff der Struktur

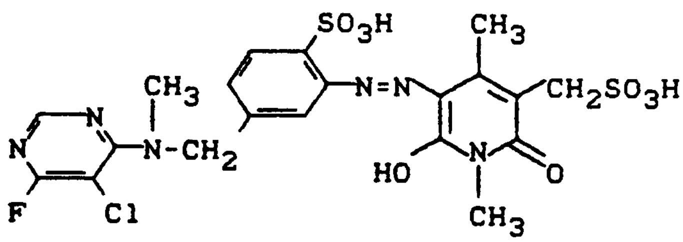

der auf Baumwolle brillante grünstichig gelbe Färbungen liefert.

Beispiel 12

130 g des salzhaltigen Pyridonfarbstoffes der Struktur

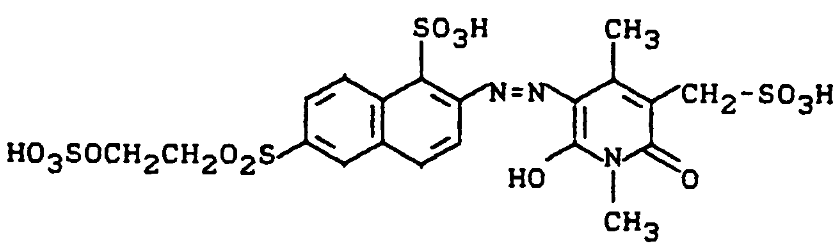

der in der europäischen Anmeldung EP 281 892 (Beispiel 1) beschrieben ist, werden in 400 ml Wasser gelöst und mit einer Lösung von 60 g Natrium-(2-aminoethyl)-sulfonat in 200 ml Wasser versetzt. Es wird auf 40 °C erwärmt und für eine Stunde bei 40 °C gerührt. Mit Salzsäure stellt man anschießend auf pH 6,0 und fügt 140 g Kochsalz hinzu. Der ausgefallene Farbstoff wird abgesaugt, und die isolierte feuchte Farbstoffpaste in 400 ml Wasser angerührt. Der pH-Wert wird auf 8,0 korrigiert und die Lösung auf 35 °C erwärmt. Portionsweise fügt man nun 25,0 g 5-Chlor-4,6-difluorpyrimidin zu und hält dabei sowie in der Nachreaktionsphase den pH-Wert mit Sodalösung konstant zwischen 7,5 und 8,5.

Nach ca. 1 Stunde ist die Kondensationsreaktion beendet. Es wird auf 20 °C abgekühlt und mit 50 g Natriumchlorid und 50 g Kaliumchlorid ausgesalzen. Der Farbstoff wird abgesaugt und getrocknet. Er färbt Baumwolle in grünstichig gelbem Farbton und besitzt die Struktur

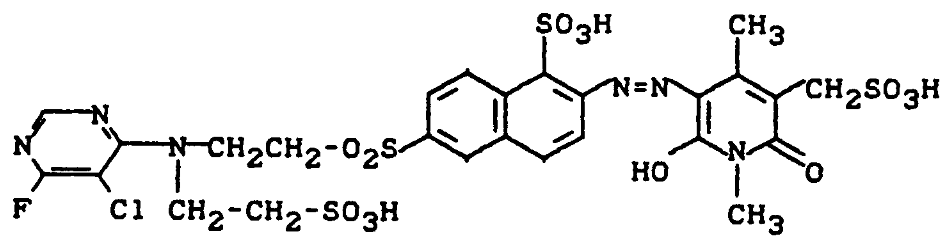

$(\lambda_{max} = 426\ nm)$

Beispiel 13

Eine Diazoniumsalzmischung, die durch Diazotieren von 25,1 g 3-Aminobenzolsulfonsäure bereitet wurde, wird zu einer neutralen Mischung von 50,0 g des Kondensationsproduktes aus 2,4-Diaminobenzolsulfonsäure (Na-Salz) und 5-Chlor-4,6-difluorpyrimidin (siehe Beispiel 1) in 250 ml Wasser zudosiert. Der pH-Wert wird dabei durch stetige Zugabe von festem Natriumhydrogencarbonat bei 6,0 bis 6,5 gehalten. Nach sechsstündiger Reaktionszeit wird der Farbstoff der Struktur

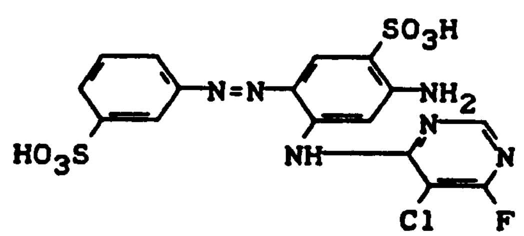

durch Aussalzen mit Kochsalz und Absaugen isoliert. Die feuchte Paste des Zwischenproduktes wird in 200 ml Wasser und 200 g Eis suspendiert und bei 0 °C mit Salzsäure auf pH 2,3 bis 2,5 gestellt. Es wird langsam mit 35 ml einer Natriumnitritlösung (300 g/l) diazotiert, wobei sowohl die Temperatur bei 0 °C wie auch der pH-Wert bei 2,3 bis 2,5 konstant gehalten wird. Es wird eine Stunde nachgerührt, der Nitritüberschuß entfernt und die Diazotierung innerhalb von 30 Minuten zu einer Lösung von 41,2 g 1,4-Dimethyl-3-aminocarbonyl-5-sulfomethyl-6-hydroxy-2-pyridon (Na-Salz) in 250 ml Wasser gegeben. Durch Zutropfen von Sodalösung hält man den pH-Wert bei 6,5 bis 7,5. Nach Zugabe der Diazotierung rührt man 15 Minuten nach und isoliert den Farbstoff durch Aussalzen (100 g Kaliumchlorid) und Abnutschen. Nach dem Trocknen bei 60 °C resultieren 145 g eines salzhaltigen roten Farbstoffpulvers, dem folgende Struktur zukommt:

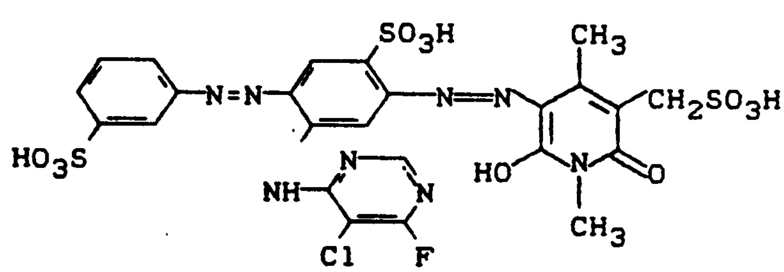

$\lambda_{max} = 458\ nm\ (H_2O)$

Der neue Disazopyridonfarbstoff färbt Baumwolle in brillanten orangenen Farbtönen.

Variiert man in Beispiel 13 die erste Diazokomponente sowie das Pyridonderivat und verfährt bei den Umsetzungen wie in Beispiel 13, so erhält man folgende, ebenfalls wertvolle Reaktivfarbstoffe.

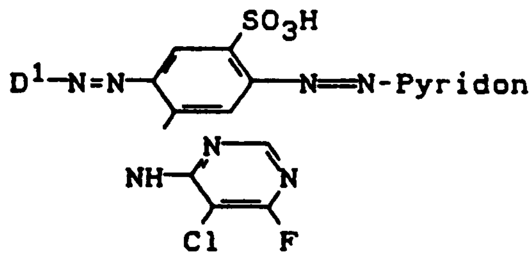

| Beispiel | $D^1$ | Pyridon | Farbton |
|---|---|---|---|
| 14 | 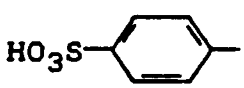 | 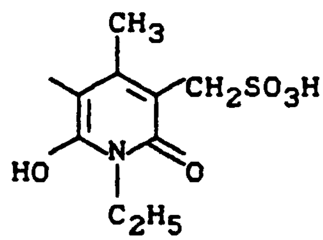 | orange (462 nm) |
| 15 | 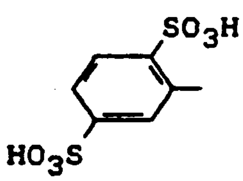 | 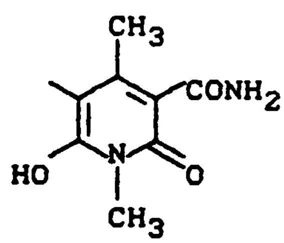 | scharlach |
| 16 | 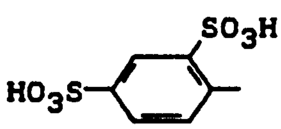 | 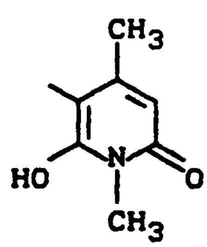 | orange |

| Beispiel | $D^1$ | Pyridon | Farbton |
|---|---|---|---|
| 17 | 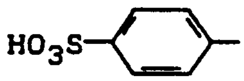 | 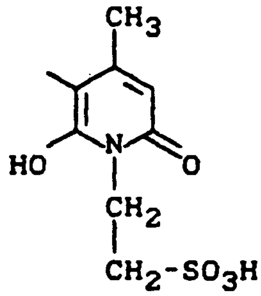 | orange (460 nm) |
| 18 | 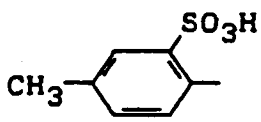 | 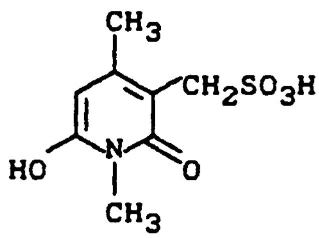 | orange (457 nm) |
| 19 | 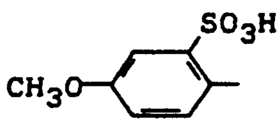 | 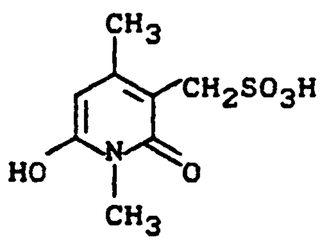 | rot |
| 20 | 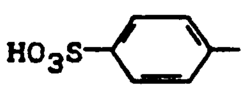 | 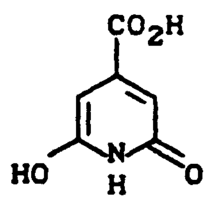 | orange |

Beispiel 21

28,6 g 1-(2-Aminoethyl)-3-aminocarbonyl-4-methyl-6-hydroxy-2-pyridon werden in 250 ml Wasser neutral gelöst und die Lösung auf 35 °C erwärmt. Bei konstantem pH 8,0 fügt man portionsweise 23,2 g 5-Chlor-4,6-difluorpyrimidin zu. Der pH-Wert wird durch Zugabe von Sodalösung kontrolliert. Es wird 30 Minuten bei 35 °C nachgerührt, wobei das Kondensationsprodukt der Struktur

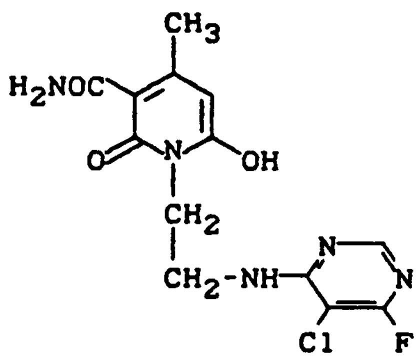

teilweise auskristallisiert. Man erwärmt auf 60°C und fügt dann bei pH 7 55 ml einer neutralen 37%igen Hydroxymethansulfonsäurelösung zu. Es wird bei konstantem pH 7 für eine weitere Stunde bei 60°C erwärmt, wobei eine klare Reaktionslösung resultiert. Die Lösung des neuen Zwischenproduktes der Struktur

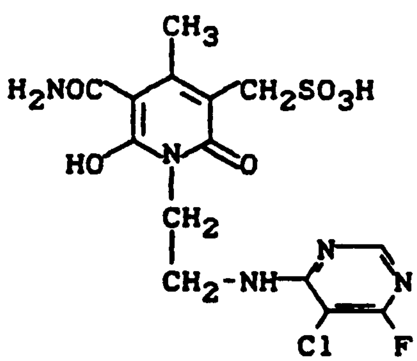

wird auf Raumtemperatur abgekühlt und mit einer Diazoniumsalzmischung, die durch Diazotieren van 47,1 g 2-Amino-1,5-naphthalindisulfonsäure-Na-Salz bereitet wurde, umgesetzt. Während der Kupplung hält man den pH-Wert mit Sodalösung konstant bei 6,5 bis 7,5. Nach Reaktionsende salzt man mit Natriumchlorid aus und saugt den ausgefallenen Farbstoff ab. Nach dem Trocknen erhält man ca. 150 g eines gelben Farbstoffpulvers der Struktur

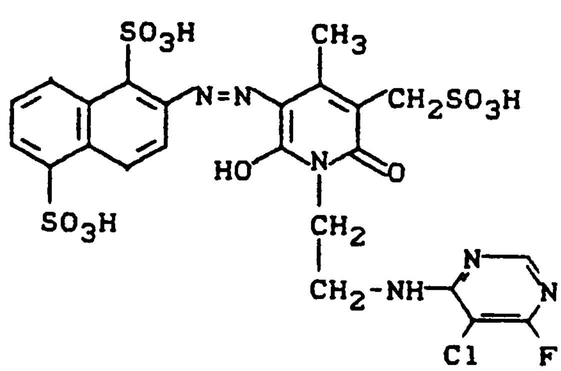

das Baumwolle in klaren gelben Tönen mit hohem Echtheitsniveau färbt.
$\lambda_{max}$ = 430 nm ($H_2O$)
Durch Variation der Diazokomponente sowie der Pyridonsubstitution sind in Analogie zu Beispiel 21 weitere wertvolle Reaktivfarbstoffe zugänglich:

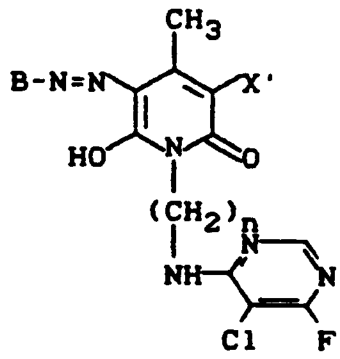

| Beispiel | B | X' | n | Farbton |
|---|---|---|---|---|
| 22 | 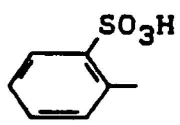 | $CH_2SO_3H$ | 2 | grünstichig gelb (422 nm) |
| 23 | 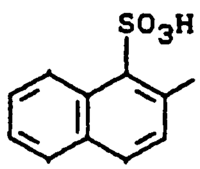 | $CH_2SO_3H$ | 2 | gelb |
| 24 | 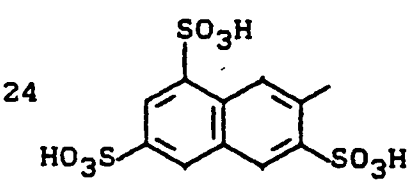 | $CONH_2$ | 2 | gelb |
| 25 | 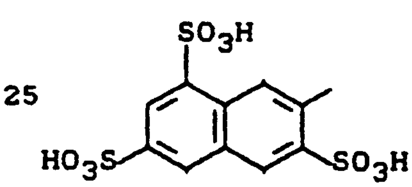 | H | 2 | gelb |
| 26 | 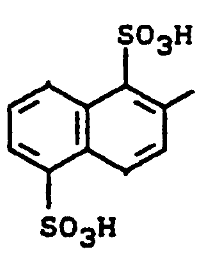 | $CH_2SO_3H$ | 3 | gelb (430 nm) |

| Beispiel | B | X' | n | Farbton |
|---|---|---|---|---|
| 27 | 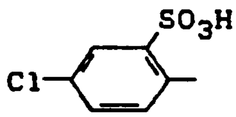 | $CH_2SO_3H$ | 2 | grünstichig gelb |
| 28 | 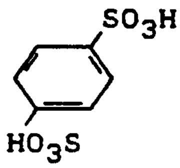 | H | 2 | grünstichig gelb |
| 29 | 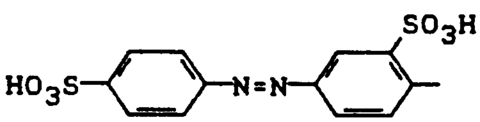 | $CH_2SO_3H$ | 2 | goldgelb (456 nm) |
| 30 | 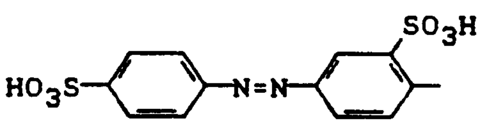 | $CH_2SO_3H$ | 3 | goldgelb (456 nm) |

**Patentansprüche**

1. Monoreaktive Mono- und Disazoreaktivfarbstoffe der Formel

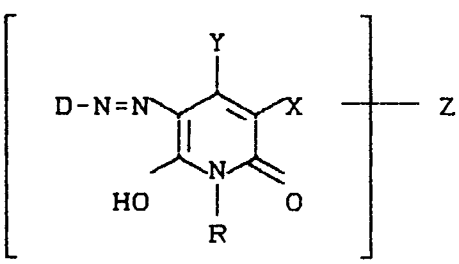 (1)

worin

D = Rest einer Diazokomponente,

R = H, ein gegebenenfalls durch OH, $SO_3H$, $OSO_3H$, $NH_2$, $CO_2H$, NH($C_1$-$C_4$-Alkyl), $C_1$-$C_4$-Alkoxy substituierter $C_1$-$C_6$-Alkylrest, ein cycloaliphatischer $C_3$-$C_6$-Kohlenwasserstoffrest, ein gegebenenfalls durch $SO_3H$, $CO_2H$, $CH_3$, Cl, Br, $OCH_3$, $OC_2H_5$, $NH_2$, NH($C_1$-$C_4$-Alkyl) substituierter Phenyl- oder Hetarylrest,

X = H, Cl, Br, $CH_3$, $CH_2SO_3H$, $CH(CH_3)$-$SO_3H$, $CONH_2$, CN,

$COCH_3$, $SO_3H$, 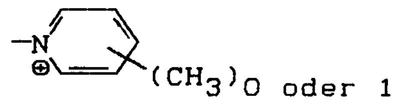

oder

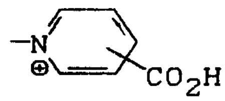

Y = H, OH, ein gegebenenfalls durch Cl, OH, $SO_3H$, $OSO_3H$, $CO_2H$ substituierter $C_1$-$C_4$-Alkylrest;
ein gegebenenfalls durch $SO_3H$, $CO_2H$, $CH_3$, Cl, Br, $OCH_3$, $OC_2H_5$, $NH_2$, NH($C_1$-$C_4$-Alkyl) substituierter Phenyl-bzw. Benzylrest oder $CO_2H$ und

Z für den faserreaktiven Rest der Formel (2)

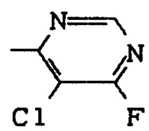 (2)

steht, der über eine Iminobrücke an den Chromophor gebunden ist.

**2.** Farbstoffe des Anspruchs 1 der Formel

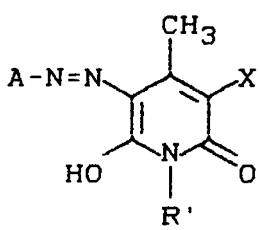

und

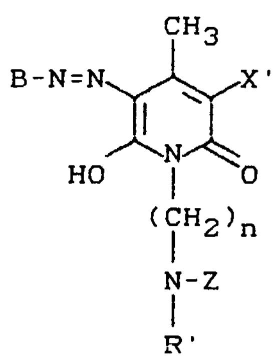

worin A =

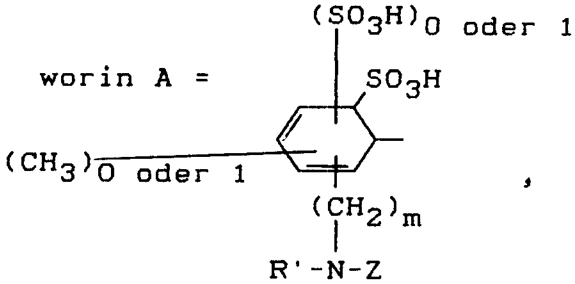

,

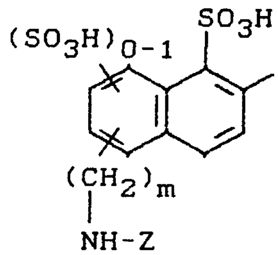

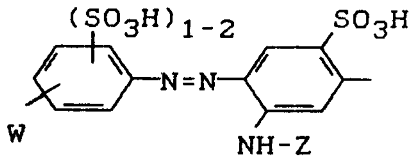

B =

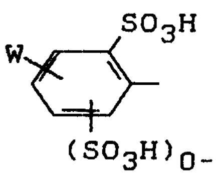

,

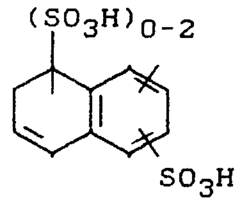

,

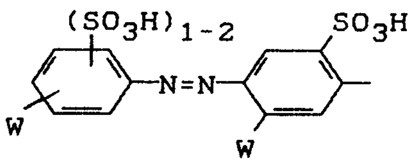

worin

n = 2, 3 oder 4,
m = 0 oder 1
R' = H, $CH_3$, $C_2H_5$, $C_3H_7$, $C_4H_9$, $CH_2CH_2OH$, $CH_2CH_2SO_3H$, $CH_2CH_2OSO_3H$ oder $CH_2CH_2CH_2$-$OCH_3$
X' = H, $SO_3H$, $CONH_2$ oder $CH_2SO_3H$,
W = H, $CH_3$, $OCH_3$, $OC_2H_5$, Cl, Br, $NHCOCH_3$ oder $NHCONH_2$,

**3.** Farbstoffe des Anspruchs 2 der Formel

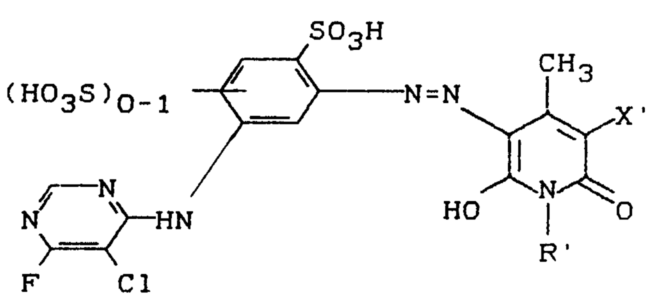

worin X' und R' die in Anspruch 2 genannte Bedeutung haben.

## Claims

1. Monoreactive mono- and disazo reactive dyestuffs of the formula

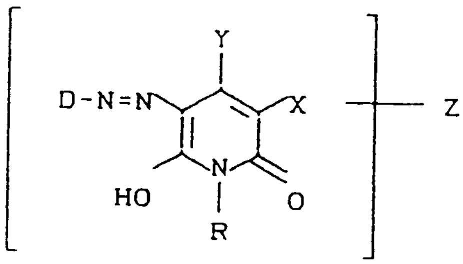

(1) (1)

in which

D is the radical of a diazo component,

R is H, a $C_1$-$C_6$-alkyl radical which is unsubstituted or substituted by OH, $SO_3H$, $OSO_3H$, $NH_2$, $CO_2H$, NH($C_1$-$C_4$-alkyl), $C_1$-$C_4$-alkoxy, a cycloaliphatic $C_3$-$C_6$-hydrocarbon radical, a phenyl or hetaryl radical each of which is unsubstituted or substituted by $SO_3H$, $CO_2H$, $CH_3$, Cl, Br, $OCH_3$, $OC_2H_5$, $NH_2$, NH($C_1$-$C_4$-alkyl),

X is H, Cl, Br, $CH_3$, $CH_2SO_3H$, $CH(CH_3)$-$SO_3H$, $CONH_2$, CN, $COCH_3$, $SO_3H$,

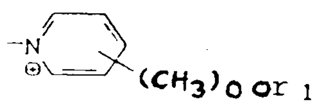

or

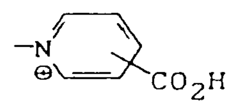

Y is H, OH, a $C_1$-$C_4$-alkyl radical which is unsubstituted or substituted by Cl, OH, $SO_3H$, $OSO_3H$, $CO_2H$; a phenyl or benzyl radical each of which is unsubstituted or substituted by $SO_3H$, $CO_2H$, $CH_3$, Cl, Br, $OCH_3$, $OC_2H_5$, $NH_2$, NH($C_1$-$C_4$-alkyl), or is $CO_2H$, and

Z represents the fibre-reactive radical of the formula (2)

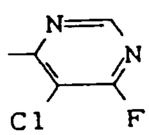

(2),

which is bonded to the chromophore via an amino bridge.

**2.** Dyestuffs of Claim 1 of the formula

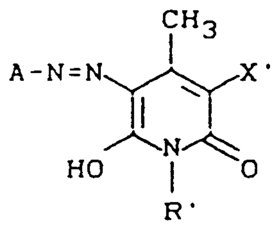

and

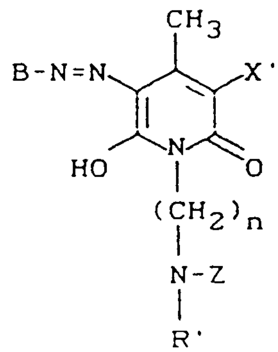

in which

A is

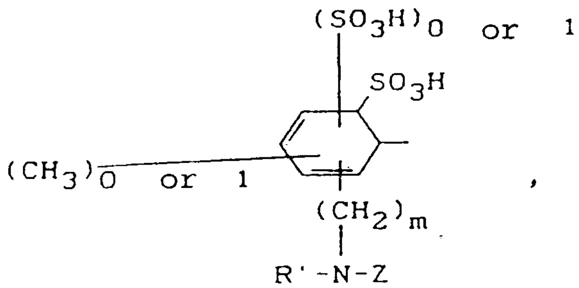

,

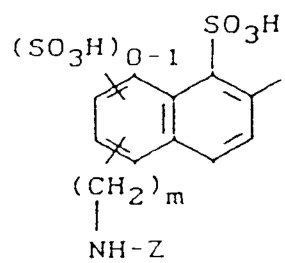

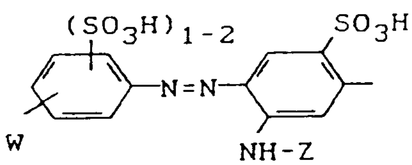

B is

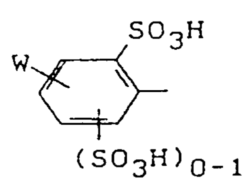

,

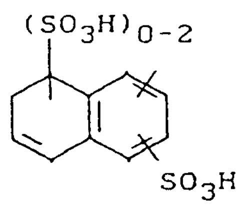

,

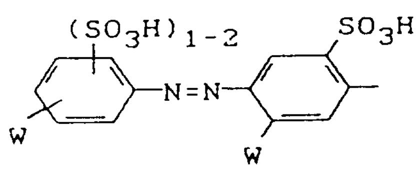

,

in which

n is 2, 3 or 4,

m is 0 or 1

R' is H, $CH_3$, $C_2H_5$, $C_3H_7$, $C_4H_9$, $CH_2CH_2OH$, $CH_2CH_2SO_3H$, $CH_2CH_2OSO_3H$ or $CH_2CH_2CH_2$-$OCH_3$

X' is H, $SO_3H$, $CONH_2$ or $CH_2SO_3H$,

W is H, $CH_3$, $OCH_3$, $OC_2H_5$, Cl, Br, $NHCOCH_3$ or $NHCONH_2$.

**3.** Dyestuffs of Claim 2 of the formula

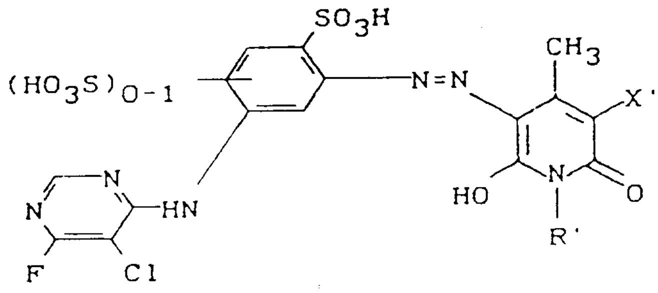

in which X' and R' have the meaning given in Claim 2.

**Revendications**

**1.** Colorants réactifs mono-azoïques et disazoïques monoréactifs de formule

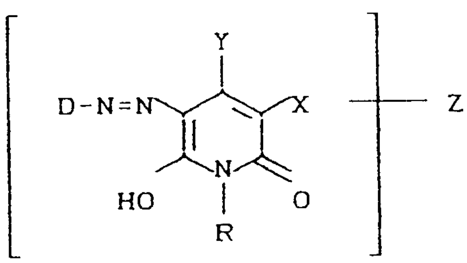 (1)

dans laquelle

D est le reste d'un composant diazotable,

R représente H, un reste alkyle en $C_1$ à $C_6$ éventuellement substitué par un radical OH, $SO_3H$, $OSO_3H$, $NH_2$, $CO_2H$, NH(alkyle en $C_1$ à $C_4$), alkoxy en $C_1$ à $C_4$, un reste d'hydrocarbure cycloaliphatique en $C_3$ à $C_6$, un reste phényle ou hétaryle éventuellement substitué par un radical $SO_3H$, $CO_2H$, $CH_3$, Cl, Br, $OCH_3$, $OC_2H_5$, $NH_2$, NH(alkyle en $C_1$ à $C_4$),

X représente H, Cl, Br, $CH_3$, $CH_2SO_3H$, $CH(CH_3)-SO_3H$, $CONH_2$, CN, $COCH_3$, $SO_3H$,

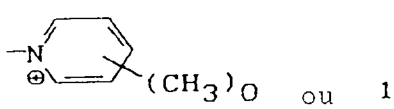

ou

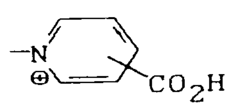

Y représente H, OH, un reste alkyle en $C_1$ à $C_4$ éventuellement substitué par Cl, OH, $SO_3H$, $OSO_3H$, $CO_2H$ ; un reste phényle ou benzyle éventuellement substitué par un radical $SO_3H$, $CO_2H$, $CH_3$, Cl, Br, $OCH_3$, $OC_2H_5$, $NH_2$, NH(alkyle en $C_1$ à $C_4$) ou un groupe $CO_2H$ et

Z représente un reste réactif envers la fibre, de formule (2)

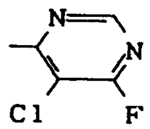

(2)

qui est lié au chromophore par l'intermédiaire d'un pont imino.

**2.** Colorants suivant la revendication 1, de formules

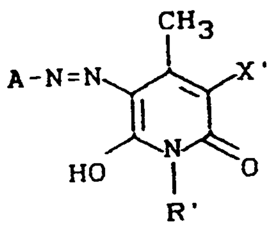

et

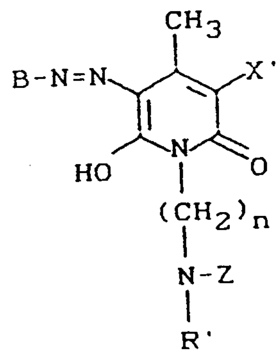

dans lesquelles A représente

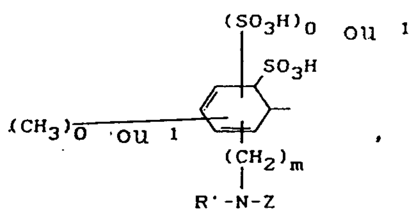

,

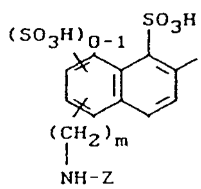

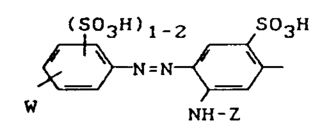

B =

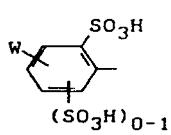

,

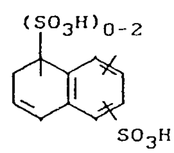

,

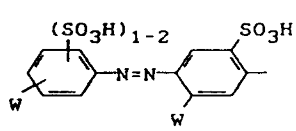

où

- n a la valeur 2, 3 ou 4,
- m a la valeur 0 ou 1
- R' représente H, $CH_3$, $C_2H_5$, $C_3H_7$, $C_4H_9$, $CH_2CH_2OH$, $CH_2CH_2SO_3H$, $CH_2CH_2OSO_3H$ ou $CH_2CH_2CH_2OCH_3$
- X' représente H, $SO_3H$, $CONH_2$ ou $CH_2SO_3H$,
- W représente H, $CH_3$, $OCH_3$, $OC_2H_5$, Cl, Br, $NHCOCH_3$ ou $NHCONH_2$.

**3.** Colorants suivant la revendication 2, de formule

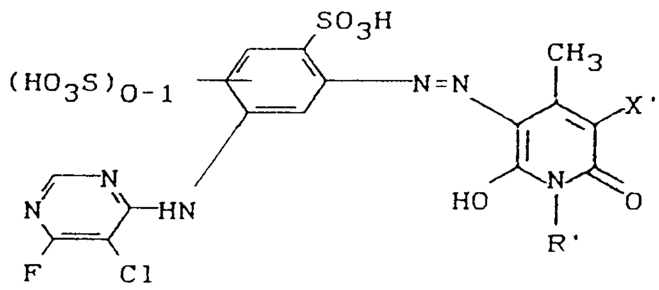

dans laquelle X' et R' ont la définition indiquée dans la revendication 2.